# EUROPÄISCHE PATENTSCHRIFT

(11) **EP 2 073 085 B1**
(45) Veröffentlichungstag und Bekanntmachung des Hinweises auf die Patenterteilung: **27.04.2011**
(21) Anmeldenummer: 07123633.5
(22) Anmeldetag: 19.12.2007
(51) Int. Cl.: G05B 19/406, G05B 19/18, B23Q 17/00

(54) **Fertigungsanlage oder Automatisierungsanlage mit Signalerzeugung mittels Direktantrieb und Verfahren zum Erzeugung von Signalen in einer solchen Anlage**
Production or automation facility with signal generation by means of a direct drive and method for generating signals in such a facility
Installation de production ou installation automatique avec génération de signaux induite par un entraînement direct et procédé de génération de signaux dans une telle installation

(43) Veröffentlichungstag der Anmeldung: 24.06.2009
(73) Patentinhaber: Klingelnberg AG, 8050 Zürich (CH)
(72) Erfinder: Zagromski, Martin, 58300 Wetter / Ruhr (DE)
(74) Vertreter: OK pat AG

(56) Entgegenhaltungen:
- EP-A- 0 165 482
- EP-A- 1 454 713
- US-A- 6 085 121
- US-B1- 6 241 435
- ANONYMOUS: 'Werkzeugmaschine', [Online] 17 Dezember 2007, Seiten 1 - 9 Gefunden im Internet: <URL:http://de.wikipedia.org/w/index.php?ti tle=Werkzeugmaschine&oldid=40172450> [gefunden am 2010-05-12]

## Beschreibung

Die Erfindung betrifft Fertigungsanlagen und Automatisierungsanlagen mit mindestens einem Direktantrieb und Verfahren zum Betreiben solcher Anlagen.

### HINTERGRUND DER ERFINDUNG

In Werkzeugmaschinen kamen bisher teilweise die herkömmlichen Spindel-Muttersysteme in Verbindung mit rotierenden Motoren zum Einsatz. Im letzten Jahrzehnt ist das Interesse an der Integration von sogenannten numerisch kontrollierten (NC) Linearmotoren in Werkzeugmaschinen gewachsen und es gibt einige Maschinen, die solche Linearmotoren einsetzen. Linearmotoren ermöglichen es direkt eine translatorische Bewegung darzustellen, man nennt sie deswegen auch Direktantriebe. Es gibt aber auch Direktantriebe, die eine Drehbewegung erzeugen.

Die seit einigen Jahren stetig steigenden Anforderungen nach Geschwindigkeit und niedrigen Kosten bei hoher Genauigkeit und Zuverlässigkeit begründen die vermehrte Anwendung von Linearmotoren generell in Fertigungs- und Automatisierungsanlagen und Robotern. Fertigungs-, Automatisierungsanlagen und Roboter werden hier der Einfachheit halber mit dem Begriff Maschine subsumiert.

Es gibt aber auch andere Arten von numerisch kontrollierten (NC) Aktuatoren (oder Aktoren), die in Maschinen eingesetzt werden. Die genannten Linearmotoren und Aktoren werden alle durch eine numerische Steuerung angesteuert. Die Steuerung prägt entweder elektrische Ströme ein, oder es werden Volumenströme von Fluiden (Hydraulikflüssigkeit) in den Aktor gepumpt.

All diesen Systemen ist gemeinsam, dass die bewegten Massen der damit angetriebenen NC-Achsen mit den Lagerungen der Linearmotoren oder Aktoren und den feststehenden Maschinenteilen der Maschine ein schwingungsfähiges System ergeben. Je nach Betriebszustand entstehen in solchen Systemen Schwingungen. Diese Schwingungen sind aber eher unerwünscht und es gibt verschiedene Entwicklungen, die sich zum Ziel setzen die Schwingungen zu vermeiden oder zu reduzieren.

Bei Maschinen, die immer komplexer und grösser werden, ist es trotz der Automatisierung stets wünschenswert dem Benutzer Rückmeldungen zu geben. Einerseits gibt es dazu typischerweise Bildschirme mit einer graphischen Benutzeroberfläche. Oft werden aber zusätzlich akustische Signalgeber eingesetzt, um zum Beispiel vor dem Anlaufen einer Maschine einen Warnton abzugeben. Die Maschinen werden mit entsprechenden Lautsprechern und einer Signalquelle ausgestattet, die vorzugsweise von der Steuerung der Maschine kontrolliert wird. Der technische Aufwand, der betrieben werden muss, um die akustischen Signale auch bei laufender Maschine hörbar zu machen, kann recht gross sein.

Teilweise sind zum Beispiel sogenannte Anlaufwarneinrichtungen gesetzlich vorgeschrieben, die vor dem Anlaufen einer Maschine zwangsläufig ein deutlich wahrnehmbares akustisches Signal abgeben.

Aus der publizierten europäischen Patentanmeldung EP 1 454 713 A2 ist ein Handwerkzeug bekannt das zum Abgeben von Befestigungselementen ausgelegt ist. Es wird in gewissen Situationen eine Vibration des Gehäuses dieses Handwerkzeugs hervor gerufen, um dem Bediener so eine spürbare Rückmeldung zu geben. Es wird ein oszillierender Rotor speziell dazu eingesetzt diese Vibrationen des Gehäuses zu bewirken.

Es stellt sich daher die Aufgabe ein Signalgebungssystem für akustische und/oder fühlbare Signale in einer Maschine vorzusehen, um z.B. Warnungen übermitteln zu können. Das Signalgebungssystem soll möglichst kostengünstig und robust sein.

Eine weitere Aufgabe wird darin gesehen, ein entsprechendes Verfahren vorzuschlagen, das in Maschinen eingesetzt werden kann, um Signale abgeben zu können. Ein Ziel ist es dabei die Arbeitssicherheit zu verbessern.

Gemäss Erfindung kommen elektrische und/oder hydraulische Antriebe (z.B. Vorschub- oder Drehantriebe) in Fertigungs- und Automatisierungsanlagen (hier generell als Maschinen bezeichnet) zum Einsatz. Es geht insbesondere um Linearmotoren (auch lineare Synchronmotoren bzw. LSM genannt), vorzugsweise um permanentmagneterregte Synchronlinearmotoren, und um (Gleichstrom-) Torquemotoren. Die Erfindung kann aber auch auf andere elektrische Aktoren oder auf hydraulische Aktoren angewendet werden.

Eine erfindungsgemässe Maschine weist eine NC-Steuerung und mindestens einen durch diese Steuerung ansteuerbaren direkt angetriebenen Motor auf, der mit seiner Lagerung und/oder Teilen der Maschine ein schwingfähiges System bildet. Die Steuerung prägt dem Motor Steuergrössen ein, die eine gewünschte Bewegung des Motors auslösen. Weiterhin prägt die Steuerung dem Motor vorgegebene Signalgrössen ein, die gewünschte mechanische Schwingungen des schwingfähigen Systems auslösen, wobei die Signalgrössen so vorgegeben werden, dass die mechanischen Schwingungen hör- und/oder fühlbar sind.

Ein erfindungsgemässes Verfahren zum Erzeugen von hör- und/oder fühlbar Signalen in einer Maschine zeichnet sich dadurch aus, dass eine Signalgrösse durch eine Steuerung erzeugt wird, die gewünschte mechanische Schwingungen eines schwingfähigen Systems auslösen sollen, wobei ein Direktantrieb der Maschine gleichzeitig Anregungselement und Teil des schwingfähigen Systems ist. Die Signalgrösse wird in den Motor eingeprägt, um über den Motor das schwingfähige System in mechanische Schwingung zu versetzen, wobei die mechanische Schwingung im Umfeld der Maschine hör- und/oder fühlbar ist.

Vorteilhafte Ausgestaltungen der erfindungsgemässen Maschine, respektive des entsprechenden Verfahrens, bilden die Gegenstände der abhängigen Ansprüche.

### ZEICHNUNGEN

Ausführungsbeispiele der Erfindung werden im Folgenden unter Bezugnahme auf die Zeichnungen näher beschrieben. Es zeigen:
- **FIG. 1**: eine dreidimensionale Darstellung einer erfindungsgemässen Maschine;
- **FIG. 2**: eine dreidimensionale Darstellung des Innenaufbaus der erfindungsgemässen Maschine;
- **FIG. 3**: eine schematische Schnittdarstellung einer Werkzeugspindel mit Direktantrieb, wie er in einer erfindungsgemässen Maschine zum Einsatz kommen kann;
- **FIG. 4**: ein schematisches Blockdiagramm einer NC-Steuerung eines Direktantriebs, wie sie in einer erfindungsgemässen Maschine zum Einsatz kommen kann.

### DETAILLIERTE BESCHREIBUNG

Im Zusammenhang mit der vorliegenden Beschreibung werden Begriffe verwendet, die auch in einschlägigen Normen Verwendung finden. Es sei jedoch angemerkt, dass die Verwendung dieser Begriffe lediglich dem besseren Verständnis dienen soll. Der erfinderische Gedanke und der Schutzumfang der Patentansprüche sollen durch die spezifische Wahl der Begriffe nicht in der Auslegung eingeschränkt werden. Die Erfindung lässt sich ohne Weiteres auf andere Begriffssysteme und/oder Fachgebiete übertragen. In anderen Fachgebieten sind die Begriffe sinngemäss anzuwenden.

Im Folgenden wird die Erfindung anhand von Synchronlinearmotoren beschrieben, wobei eine analoge Anwendung ohne weiteres auch bei den anderen eingangs genannten Motoren und Aktoren möglich ist. Die Erfindung kann aber zum Beispiel auch im Zusammenhang mit Torquemotoren eingesetzt werden, wie später anhand eines Ausführungsbeispiels erläutert wird.

Ähnlich wie bei der herkömmlichen rotatorischen Synchronmaschine wird auch bei dem Synchronlinearmotor durch die eingeprägten Ströme ein wanderndes Feld erzeugt, das die Bewegung eines Läufers ermöglicht. Der Ort der Erzeugung ist hierbei abhängig von der Konstruktionsform des Synchronlinearmotors. Handelt es sich um einen Langstatorantrieb, so wird das wandernde Feld im Stator erzeugt. Der Läufer besteht aus Elektro- oder Permanentmagneten und folgt dem wandernden Feld synchron. Bei einem Kurzstator-Linearmotor findet die Erzeugung des wandernden Felds in dem Läufer statt. Die Führungsschiene (d.h. der Stator) besteht hierbei aus einem Elektro- oder Dauermagneten. Beim relativ einfach aufgebauten Kurzstatorantrieb ist es notwendig die elektrische Energie auf den Läufer zu übertragen. Eine reibungsfreie Lagerung des Läufers auf dem Stator wird durch elektromagnetisches Schweben ermöglicht. Das elektromagnetische Schweben beruht auf den anziehenden bzw. abstoßenden Kräften eines magnetisch erregten Eisenkreises.

Ein Linearmotor oder ein Torquemotor, wie auch die anderen eingangs genannten Motoren und Aktoren, bildet ein dynamisches System mit reproduzierbaren Schwingungseigenschaften. Dieses dynamische System wird hier generell als schwingfähiges System bezeichnet. Zu dem Schwingverhalten des schwingfähigen Systems tragen insbesondere die Lagerung des Motors und/oder Teile der Maschine bei. Besonders diejenigen Motoren, die in direkter mechanischer Verbindung stehen mit einem Maschinenbett, einer Maschinenabdeckung (Verkleidung), oder dergleichen, sind zum Erzeugen hör- oder fühlbarer Schwingungen geeignet. Besonders bewährt haben sich Motoren, die Teil eines Schwenk-, Vorschub oder (Werkzeug- oder Werkstück-) Spindelantriebs sind. Bevorzugte Ausführungsformen der Erfindung beziehen sich daher auf diejenigen Motoren, die in direkter mechanischer Verbindung stehen mit einem Maschinenbett, einer Maschinenabdeckung (Verkleidung) oder dergleichen, wobei Motoren von Schwenk-, Vorschub oder Spindelantrieben der Vorzug gegeben wird.

Die Erfindung sieht eine spezielle Steuerung vor, die speziell geformte Eingangssignale (oder Fluidvolumenströme im Falle von hydraulischen Antrieben) für einen direkt angetriebenen Motor (oder Aktor) bereit stellt. Diese Eingangssignale werden hier generell als Signalgrösse S2 bezeichnet. Die Steuergrössen, die eine Bewegung (z.B. eine translatorische Bewegung) des Motors auslösen, werden im Unterschied zur Signalgrösse S2 mit dem Begriff Steuergrösse S1 bezeichnet. Bei den Steuergrössen S1 handelt es sich um Stell- oder Regelgrössen, die von einer NC-Steuerung (vorzugsweise eine NC-Steuerung mit Umrichter) bereit gestellt werden.

Die Signalgrösse S2 führt zu einer gezielten Anregung von Schwingungen des Motors. Es werden gemäss einer bevorzugten Ausführungsform der Erfindung einfache und robuste Regelungsalgorithmen vorgegeben und in der Steuerung (vorzugsweise in einem Signalgenerator) eingesetzt (z.B. in Hardware realisiert), die einerseits eine Stabilität und gute Performance des Motors gewährleisten und die andererseits mittels des Motors gezielt fühl- und/oder hörbare (Schwingungs-) Signale erzeugen.

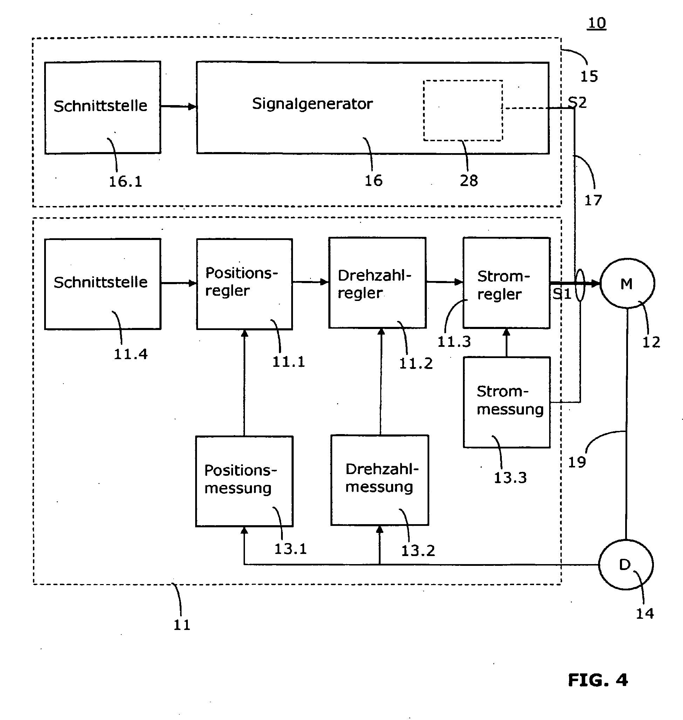

Es wird gemäss Erfindung eine klare Unterscheidung zwischen produktiven, kontrollierten Bewegungen des Motors und klangerzeugenden (unproduktiven) Bewegungen (Schwingungen) des Motors, seiner Lagerung und den umgebenden Maschinenteilen (schwingfähiges System genannt) gemacht. Beide Vorgänge sind weitestgehend auf der Steuerungsseite entkoppelt (siehe z.B. Fig. 4). Die Ansteuerung des Motors durch die NC-Steuerung zum Erzeugen produktiver Bewegungen erfolgt wie bei konventionellen Maschinen durch die Vorgabe spezieller Steuergrössen S1. Diesen produktiven Bewegungen kann jederzeit eine (unproduktive) Bewegung (mechanische Schwingung) des Motors überlagert werden. Die Schwingungen können gemäss Erfindung aber auch erzeugt werden wenn der Motor keine produktive Bewegung ausführt.

Eine entsprechende Steuerung zum Betrieb eines Motors ist allgemein bekannt. Zum Erzeugen produktiver Bewegungen wird beispielsweise über einen Sensor der Bewegungszustand (Winkelmessung) bzw. die Lage des Motors (Positionsmessung) ermittelt und die entsprechende Information der Steuerung zugeführt, die den Motor abhängig von der Differenz zwischen Soll- und Istwert der Motorparameter durch das Einprägen von Steuergrössen S1 betreibt. Auf diese Weise können auch zeitlich veränderliche Vorgabewerte wie Lage, Geschwindigkeit oder Beschleunigung relativ genau eingehalten werden.

Gleichzeitig oder zusätzlich erzeugt die erfindungsgemässe Steuerung, oder eine elektronische Baugruppe oder Schaltung, die mit der Steuerung verknüpft ist, die gewünschten Signalgrössen S2. Vorzugsweise werden diese Signalgrössen S2 situationsabhängig erzeugt/ausgegeben.

Im Folgenden sind einigen Beispiele von Situationen gegeben, in denen ein hör- oder fühlbares Signal durch den Motor einer Maschine abgegeben werden könnte:
- Beim Übergang vom automatischen (NC-gesteuerten) Betrieb in einen semi-manuellen oder manuellen Betrieb;
- Während der Wartung der Maschine, falls sich Wartungspersonal innerhalb der Maschine befindet. So kann zum Beispiel der Motor vor dem Ausführen eines Bewegungsbefehls ein (Warn-)Signal abgeben.
- Falls einer der Motoren überlastet ist, oder falls eine zu grosse Wärmeentwicklung detektiert wurde;
- Falls ein Werkzeug verschlissen sein sollte, kann über einen Motor der Maschine ein akustischer Serviceruf abgegeben werden;
- Als Anlaufwarnung vor dem Anlaufen der Maschine.

Es handelt sich bei dieser Auflistung nicht um eine abschliessende Liste, sondern lediglich um die Aufzählung einiger Beispiele, die zeigen sollen, wie flexibel und in wie vielen unterschiedlichen Situationen die Erfindung einsetzbar ist.

Im Folgenden sind einige Beispiele von Signalen angegeben, die durch den Motor einer erfindungsgemässen Maschine abgegeben werden können:
- Warnton;
- Anlaufwamung;
- Überlastmitteilung;
- Quittierungssignal nach einer Programmiereingabe;
- Funktionssignal, um die Funktionstüchtigkeit (Reaktionsfähigkeit) der einzelnen Motoren einer Maschinen nacheinander akustisch durchgehen zu können.

Auch bei dieser Aufzählung handelt es sich nur um Beispiele. Auch diese Liste ist nicht abschliessend.

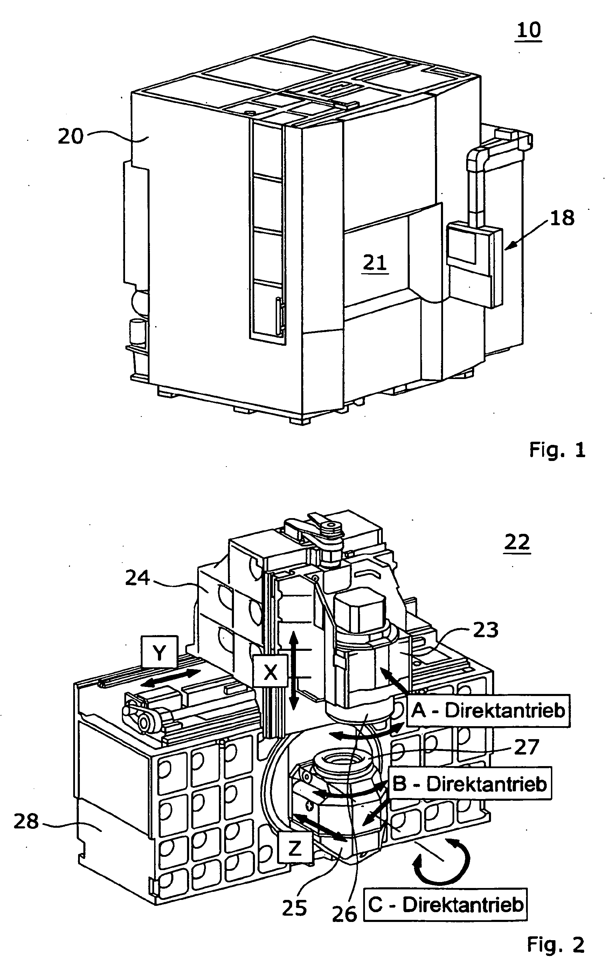

In Fig. 1 ist eine Maschine 10 gezeigt, die mit der Erfindung ausgerüstet ist. Es handelt sich um eine CNC-gesteuerte Wälzfräsmaschine (z.B. Oerlikon C 29) zum Fertigen von Kegelrädern. Unter Verwendung der Kegelradwälzfräser, stellt die Maschine 10 ein Verzahnsystem für Kegelgrad- und Hypoid-Getriebe dar, das die Voraussetzungen für die Herstellung von spiralverzahnten Ritzeln und Tellerrädern in der Einzel- und Serienfertigung bietet. Die Maschine 10 umfasst ein Gehäuse 20 (Verkleidung) mit einem Sichtfenster 21, das es ermöglicht den Fertigungsprozess zu beobachten. An einem Schwenkarm ist eine Bedieneinheit 18 angeordnet, die mit einer NC-Steuerung 11 (nicht sichtbar) verbunden ist. Die Maschine 10 ist mit einer NC-Steuerung 11 ausgestattet, die es erlaubt, mehrere Achsen simultan zu fahren. Die Programmierung der Steuerung 11 kann im Dialog über einen Bildschirm und Tasten der Bedieneinheit 18 erfolgen, oder über eine Netzwerkverbindung.

In Fig. 2 ist der Innenaufbau 22 der Maschine 10 gezeigt. Die gezeigte Maschine hat sechs NC-gesteuerte Achsen: X-Achse, Y-Achse, Z-Achse, A-Achse, B-Achse und C-Achse. Die X-Achse ermöglicht eine vertikale Auf- und Abwärtsverschiebung eines Werkzeugschlittens 23. Die Y-Achse ermöglicht eine horizontale Verschiebung eines Schlittens 24, der den Werkzeugschlitten 23 trägt. Die Z-Achse ermöglicht es den Werkstückhalter 25 in einer horizontalen y-z-Ebene heraus- oder hereinzufahren. Im gezeigten Beispiel umfasst die A-Achse (Werkzeugspindelachse) einen Direktantrieb, der das Werkzeug 26 in Rotation um die vertikale stehende A-Achse versetzt. Die Maschine 10 umfasst weiterhin eine B-Achse (Werkstückspindelachse) mit einem Direktantrieb, der das Werkstück 27 in Rotation um die vertikale stehende B-Achse versetzt. Die A- und B-Achsen verlaufen parallel zueinander. Eine Drehung um die C-Achse wird durch einen weiteren Direktantrieb ermöglicht. Wie in Fig. 2 angedeutet, können durch ein Drehen um die C-Achse der Werkstückhalter 25 samt Werkstück 27 gekippt werden.

Der A-Direktantrieb sitzt unmittelbar oberhalb des Werkzeugs 26 und treibt die Werkzeugspindel an. Der B-Direktantrieb sitzt unmittelbar unterhalb des Werkstücks 27 und der Werkstückspindel. Der C-Direktantrieb sitzt im Inneren des Maschinenbetts 28.

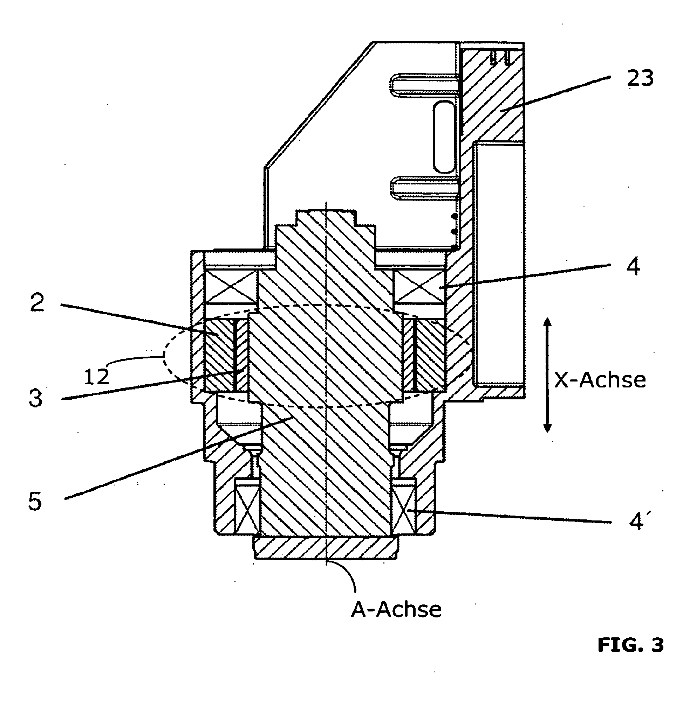

In Fig. 3 ist eine schematische Schnittdarstellung eines A-Direktantriebs gezeigt. Die Werkzeugspindel ist mit 5 bezeichnet. Sie weist eine A-Achse auf, die parallel zur X-Achse verläuft. Um diese A-Achse herum kann sich das Werkzeug (nicht gezeigt) drehen. Rechts ist in Fig. 3 der Werkzeugschlitten 23 zu erkennen. Konzentrisch um die Werkzeugspindel 5 herum sind der Stator 2 eines Torquemotors 12 und der Rotor 3 dieses Torquemotors angeordnet. Wenn der Torquemotor 12 mit einer Steuergrösse S1 beaufschlagt wird, die von der Steuerung 11 bereit gestellt wird, dann dreht der Motor 12 die Werkzeugspindel 5 um die A-Achse. Die Lage des Motors 12 ist in Fig. 3 durch ein gestricheltes Oval angedeutet. Die Werkzeugspindel 5 wird im gezeigten Beispiel durch zwei Radiallager 4, 4' gelagert. Diese Radiallager 4, 4' stellen eine mechanische Verbindung her zwischen der Werkzeugspindel 5 und den restlichen Teilen der Maschine 10. Diese mechanische Verbindung dient auch als akustische Kopplung und bildet mit den Teilen der Maschine 10 ein schwingfähiges System.

In Fig. 4 ist eine mögliche Ausführungsform des elektrischen/elektronischen Teils einer Maschine 10 gezeigt. Fig. 4 zeigt einen Motor (M) 12 (z.B. den Torquemotor nach Fig. 3) einer Maschine 10 samt einer Steuerung 11 (Servoregelung). Die Steuerung 11 treibt den Motor 12 an, der Teil eines Direktantriebssystems ist. Dem Motor 12 wird eine Steuergrösse S1 (z.B. entsprechende Ströme) eingeprägt, wie durch einen dicken Pfeil angedeutet. Die entsprechende Steuergrösse S1 wird im gezeigten Ausführungsbeispiel durch eine Reihe von Reglern 11.1, 11.2 und 11.3 erzeugt. Dem Positionsregler 11.1 und dem Drehzahlregler 11.2 ist je eine entsprechende Messeinheit 13.1, 13.2 zur Seite gestellt, die Messsignale von einem Drehgeber (D) oder Winkelgeber 14 erhalten. Der Drehgeber (D) oder Winkelgeber 14 ist mechanisch, optisch oder kapazitiv mit dem Motor 12 gekoppelt, wie durch die Verbindungslinie 19 angedeutet. Der Stromregler 11.3 bekommt Rückmeldungen von einem Strommesser 13.3, der den Strom S1 (auch als Steuergrösse bezeichnet) misst, wie in Fig. 4 angedeutet.

Sowohl die Stromregelung 11.3, die Drehzahlregelung 11.2, als auch die Positionsregelung 11.1 können digital realisiert sein. Die Regelungen 11.1, 11.2, 11.3 können aber auch analog realisiert sein.

Die Schnittstelle 11.4 erhält Steuerbefehle (z.B. in Form von Maschinendaten) von einem Rechner, der nicht gezeigt ist. Diese Steuerbefehle werden von der Steuerung 11 in Positions-Steuergrössen und/oder Rotations-Steuergrössen umgesetzt.

Oberhalb der Steuerung 11 ist eine Signalquelle 15 gezeigt, welche die Signalgrösse S2 erzeugt. Die Signalquelle 15 umfasst z.B. einen Signalgenerator 16 (z.B. einen Sinusgenerator) mit integriertem Verstärker. Über einen Ausgang 17 wird die Signalgrösse S2 zusammen mit der Steuergrösse S1 an den Eingang des Motors 12 angelegt. D.h., die Signalgrösse S2 wird der Steuergrösse S1 überlagert und dann in den Motor 12 eingeprägt.

Sowohl die Signalquelle 15 als auch die Steuerung 11 können Schnittstellen 16.1, bzw. 11.4 aufweisen, um z.B. mit einem Rechner verbunden werden zu können. Die Schnittstelle 16.1 der Signalquelle 15 kann zum Beispiel mit einer Quelle verbunden sein, die ein Datenfile oder ein Soundfile vorgibt. Das Datenfile oder Soundfile gibt hör- oder fühlbare mechanische Schwingungen vor, wobei die Signalquelle 15 der Steuerung 11 das Datenfile oder Soundfile umsetzt in Signalgrössen S2. Falls ein geeignetes Datenfile oder Soundfile vorgegeben wird, dann braucht es keinen Sinusgenerator im Signalgenerator 16, sondern ein Verstärker des Signalgenerators 16 kann direkt die Signalgrössen S2 erzeugen.

Vorzugsweise umfasst die Steuerung 11 oder die Signalquelle 15 einen Filter (z.B. einen Filter 28, wie in Fig. 4 angedeutet), der Signalgrössen S2 ausblendet, die das schwingfähige System in kritische Eigenresonanz versetzen würden. Vorzugsweise kommt ein Resonanzfilter zum Einsatz.

Der Filter 28 ist in einer bevorzugten Ausführungsform abstimm- oder programmierbar. Dies ermöglicht es den Filter 28 für jeden Direktantrieb so einzustellen, dass die Eigenresonanz(en) des jeweiligen Direktantriebs erfolgreich unterdrückt oder vermieden wird/werden. Da jeder Direktantrieb aufgrund seiner Lagerung 4, 4' und/oder aufgrund der Teile der Maschine 10, die ihn umgeben, ein anderes schwingfähiges System bildet, kann eine Abstimmung oder Programmierung die Eigenresonanz(en) erfolgreich unterdrücken oder vermeiden.

Die NC-Steuerung 11 sorgt für eine geregelte Ansteuerung des Motors 12, damit dieser produktive Bewegungen in einer genau kontrollierten Art und Weise ausführen kann. Vorzugsweise bildet die NC-Steuerung 11 zusammen mit dem Motor 12 einen lagegeregelten elektrischen Direktantrieb. Sowohl Strom-, Drehzahl- und Lageregelung können digital realisiert werden, wie erwähnt. Unabhängig davon, ob es sich um einen permanterregten Synchron- oder um einen Asynchronmotor handelt, wird vorzugsweise eine sogenannte Vektor- bzw. feldorientierte Regelung als Teil der Steuerung 11 eingesetzt. Die Steuerung 11 umfasst vorzugsweise ausgangsseitig ein Umrichtersystem für die Ansteuerung des Motors 12. Vorzugsweise umfasst das Umrichtersystem einen Spannungszwischenkreis.

Optimal kann eine erfindungsgemässe Maschine genannt werden, wenn sie den anwendungsspezifischen Anforderungen wie Masse, Steifigkeit und Dämpfung sowie den gewünschten Schwingungseigenschaften wie Eigenfrequenzen, Amplituden und Abklingzeiten genügt. Man kann durch sogenanntes Soundengineering (akustische Abstimmung) die gesamte Maschine entsprechend optimieren. Diese enorm rechenaufwendige Optimierung der Maschinenparameter kann z.B. mittels einer Finite-Elemente-Rechnung durchgeführt werden.

Es können gemäss Erfindung bewusst (unkritische) Resonanzen (Resonanzfrequenzen) des Motors eingesetzt werden, um laute Töne oder deutlich fühlbare Schwingungen zu erzeugen. Das Problem beim Betrieb eines Motors im Resonanzbereich ist jedoch, dass grosse Bewegungsamplituden erzeugt werden, die zu Ermüdungen und zu einer Abnahme der Genauigkeit führen können. Diese Ausführungsform ist daher nicht bevorzugt, wenn es um Maschinen geht, bei denen die Genauigkeit eine Rolle spielt. Um kritische Eigenresonanzen zu vermeiden, kann ein Filter 28 eingesetzt werden, wie weiter oben beschrieben.

Die Steuerung 11 sollte gemäss einer bevorzugten Ausführungsform der Erfindung so ausgelegt und aufgebaut sein, dass die Leistung und Stabilität des Direktantriebs garantiert wird, während gewünschte Schwingungssignale erzeugt werden.

Vorzugsweise wird die Steuerung 11 als intelligente Steuerung ausgelegt, die stets sicher stellt, dass die produktive, kontrollierte Bewegung des Motors 12 Vorrang hat vor klangerzeugenden (unproduktiven) Bewegungen (mechanischen Schwingungen) des Motors 12. Bei der Bearbeitung eines Werkstücks z.B. könnte die mechanische Schwingung zu Fertigungsungenauigkeiten führen. Daher würden in einem solchen Fall die Schwingungen unterdrückt oder vorzugsweise an einen anderen Motor 12 der Maschine 10 übermittelt. Eine entsprechende intelligente Steuerung 11 kann z.B. ein Schaltelement aufweisen, das die Leitung 17 bei Bedarf unterbricht (z.B. damit momentan keine störende Schwingung auftritt), oder das die Leitung 17 mit der Signalgrösse 52 an einen anderen Direktantrieb leitet, der momentan nicht produktiv ist.

Besonders bevorzugt ist eine Ausführungsform der Erfindung, die eine Art "intelligenten Selektor" aufweist. Dieser Selektor wählt jeweils denjenigen Motor 12 der Maschine 10, dessen produktive Last nicht oder am wenigsten durch das Einprägen der Signalgrössen S2 beeinflusst wird. Da jeder der Motoren 12 auf Grund seiner Einbausituation ein eigenes schwingfähiges System bildet, müssen z.B. für drei Motoren drei verschiedene Signalgrössen S2, S2* und S2" vorgegeben sein, damit alle drei Motoren in der Lage sind den gleichen (oder annähernd den gleichen) Signalton abzugeben.

An jeder erfindungsgemässen Maschine 10 kann ein softwaregesteuertes Einstimmen der einzelnen Motoren erfolgen. Vorzugsweise wird zu diesem Zweck die Maschine 10 mit akustischen oder Körperschall messenden Sensoren versehen. Dann wird eine Signalgrösse S2 vorgegeben, die einen bestimmten Signalton erzeugen soll. Es erfolgt dann ein automatischer Ist/Sollwertvergleich und die Signalgrösse S2 wird geändert, bis der gewünschte Signalton erreicht ist. So kann die ganze Maschine 10 eingestimmt werden. Dieses Einstimmen der Maschine 10 kann von Zeit zu Zeit wiederholt werden, da sich Veränderungen im Laufe des Betriebs einstellen können.

Die erfindungsgemässe Steuerung 11 kann einen Fernzugriff z.B. per Ethernet neben den üblichen Busschnittstellen, wie Profibus, CAN-Bus und Interbus aufweisen. Über eine solche (Ethernet)Schnittstelle (z.B. die Schnittstelle 11.4) kann eine Maschine 10 oder ein Maschinenverbund in ein Firmennetzwerk integriert werden. Dadurch kann die Vorgabe der Signalgrössen S2 prinzipiell von jedem beliebigen PC kontrolliert werden. So hat der Anwender die Möglichkeit, komfortabel von seinem PC auf alle Steuerungen 11 einer Produktionsanlage zuzugreifen.

Gemäss Erfindung können eine Reihe verschiedener Sensoren für die Erfassung der mechanischen Schwingungen verwendet werden, und zwar Dehnungsmessstreifen, Laser-Diode-Module und PSD (Position Sensitive Device), piezoelektrische Elemente als struktureller Aktuator/Sensor, Beschleunigungssensoren, etc. Durch den Einsatz solcher Sensoren kann ein Regelsystem aufgebaut werden, das Rückmeldungen an die Steuerung 11 liefert. So kann sichergestellt werden, dass auch wirklich ein Warnton abgegeben wurde.

Die Aufgabe der elektrischen Motoren 12 in den NC-geregelten Maschinenachsen ist es, das vom Antriebsregler (Steuerung 11) angeforderte Solldrehmoment möglichst verzerrungs- und verzögerungsfrei umzusetzen. Diese Umsetzung soll möglichst unabhängig sein von der Signalerzeugung gemäss Erfindung.

## Patentansprüche

1. Fertigungsanlage oder Automatisierungsanlage (10) mit mehreren NC-Achsen, mit einer NC-Steuerung (11) und mindestens einem durch diese Steuerung (11) ansteuerbaren, als Direktantrieb dienenden, numerisch kontrollierten Linearmotor (12), der mit seiner Lagerung (4, 4') und/oder Teilen der Fertigungsanlage oder Automatisierungsanlage (10) ein schwingfähiges System bildet, wobei die Steuerung (11) dazu ausgebildet ist, dem Linearmotor (12) Steuergrössen (S1) einzuprägen, die eine produktive, kontrollierte Bewegung des Linearmotor (12) auslösen, wobei es sich bei dem Linearmotor (12) um einen elektrischen ansteuerbaren Linearmotor (12) handelt und es sich bei den Steuergrössen (S1) um elektrische Ströme handelt
**dadurch gekennzeichnet, dass**
- die Steuerung (11) dazu ausgebildet ist in vorbestimmten Situationen, dem Linearmotor (12) zusätzlich zu den Steuergrössen (S1) vorgegebene Signalgrössen (S2) einzuprägen, die gewünschte mechanische Schwingungen des schwingfähigen Systems auslösen, wobei die Signalgrössen (S2) so vorgegeben werden, dass die mechanischen Schwingungen hör- und/oder fühlbar sind, und wobei es sich bei den Signalgrössen (S2) um elektrische Ströme handelt.

2. Fertigungsanlage oder Automatisierungsanlage (10) nach Anspruch 1, **dadurch gekennzeichnet, dass** die Steuergrössen (S1) und Signalgrössen (S2) überlagert werden, bevor sie dem Motor (12) eingeprägt werden.

3. Fertigungsanlage oder Automatisierungsanlage (10) nach einem der vorhergehenden Ansprüche, **dadurch gekennzeichnet, dass** die Steuerung (11) Filter (28), vorzugsweise einen Resonanzfilter, umfasst, die Signalgrössen (S2) ausblenden, die das schwingfähige System in Eigenresonanz versetzen würden.

4. Fertigungsanlage oder Automatisierungsanlage (10) nach einem der vorhergehenden Ansprüche 1 - 2, **dadurch gekennzeichnet, dass** der Steuerung (11) ein Datenfile oder ein Soundfile vorgebbar ist, das die hör- oder fühlbaren mechanischen Schwingungen vorgibt, wobei die Steuerung (11) das Datenfile oder Soundfile umsetzt in Signalgrössen (S2).

5. Fertigungsanlage oder Automatisierungsanlage (10) nach einem der vorhergehenden Ansprüche 1 - 2, **dadurch gekennzeichnet, dass** mittels der Steuerung (11) und dem schwingfähigen System Signaltöne und/oder Klänge erzeugbar sind.

6. Verfahren zum Erzeugen von hör- und/oder fühlbaren Signalen in vorbestimmten Situationen in einer Fertigungsanlage oder Automatisierungsanlage (10), die eine NC-Steuerung (11) und einen durch diese Steuerung (11) ansteuerbaren, als Direktantrieb dienenden elektrisch ansteuerbaren numerisch kontrollierten Linearmotor (12) umfasst, der mit seiner Lagerung (4, 4') und/oder Teilen der Fertigungsanlage oder Automatisierungsanlage (10) ein schwingfähiges System bildet, umfassend die Verfahrensschritte:
- Erzeugen von Steuergrössen (S1), die eine produktive, kontrollierte Bewegung des Linearmotors (12) auslösen, durch die Steuerung (11),
- Erzeugen von Signalgrössen (S2), die gewünschte mechanische Schwingungen des schwingfähigen Systems auslösen sollen, durch die Steuerung (11) wobei es sich bei den Signalgrössen (S2) um elektrische Ströme handelt,
- Einprägen der Signalgrössen (S2) in den Linearmotor (12) zusätzlich zu den Steuergrössen (S1, um über den Linearmotor (12) das schwingfähige System in mechanische Schwingung zu versetzen, wobei die gewünschten mechanischen Schwingungen im Umfeld der Werkzeugmaschine oder Fertigungsmaschine (10) hör- und/oder fühlbar sind und wobei es sich bei den Steuergrössen (S1) um elektrische Ströme handelt.

7. Verfahren nach Anspruch 6, **dadurch gekennzeichnet, dass** in einem weiteren Schritt ein Datenfile oder ein Soundfile vorgebbar ist, wobei die Steuerung (11) das Datenfile oder Soundfile umsetzt in die Signalgrössen (S2).

8. Verfahren nach Anspruch 7, **dadurch gekennzeichnet, dass** die Steuerung (11) beim Erzeugen der Signalgrössen (S2) Filter (28) anwendet, die Signalgrössen (S2) ausblenden, die das schwingfähige System in Eigenresonanz versetzen würden.

9. Verfahren nach einem der Ansprüche 6 bis 8, **dadurch gekennzeichnet, dass** in der Fertigungsanlage oder Automatisierungsanlage (10) Sensoren vorgesehen werden, um Rückmeldungen an die Steuerung (11) zu liefern, wobei die Steuerung (11) bei bestimmten Zuständen der Fertigungsanlage oder Automatisierungsanlage (10) vorgegebene mechanische Schwingungen erzeugt.

10. Verfahren nach einem der Ansprüche 6 oder 8, **dadurch gekennzeichnet, dass** der Fertigungsanlage oder Automatisierungsanlage (10) in einem vorbereitenden Schritt Datenfiles und/oder Soundfiles vorgebbar sind.

11. Verfahren nach einem der Ansprüche 6 bis 8, **dadurch gekennzeichnet, dass** der Fertigungsanlage oderAutomatisierungsanlage (10) in einem vorbereitenden Schritt mittels eines Benutzerinterfaces
- Signaltöne, und/oder
- Klänge
vorgebbar sind.

12. Verfahren nach Anspruch 11, **dadurch gekennzeichnet, dass** die Steuerung (11) mit einem Speichermedium verbunden wird, in dem Signaltöne und/oder Klänge vorgegeben sind.

## Claims

1. Fabrication facility or automation facility (10) having multiple NC (numerically controlled) axes, comprising an NC-controller (11) and at least one numerically controlled linear motor (12) which can be controlled by said controller (11), serves as a direct drive and forms a system able to vibrate together with its bearing (4, 4') and/or components of the fabrication facility or automation facility (10), wherein the controller (11) is adapted to feed the linear motor (12) with control factors (S1), which activate a productive controlled drive of the linear motor (12), wherein the linear motor (12) concerns an electrically controllable linear motor (12) and the control factors (S1) concern electric currents,
**characterized in that**
- the controller (10) is adapted to feed the linear motor (12) in predetermined situations with predetermined signal factors (S2) in addition to the control factors (S1), which signal factors (S2) activate desired mechanical vibrations of the system able to vibrate, wherein the signal factors (S2) are provided such that the mechanical vibrations are audible and/or tactile, and wherein the signal factors (S2) concern electric currents.

2. Fabrication facility or automation facility (10) according to claim 1, **characterized in that** the control factors (S1) and the signal factors (S2) are superimposed before they are fed onto the motor (12).

3. Fabrication facility or automation facility (10) according to any one of the preceding claims, **characterized in that** the controller (11) comprises filters (28), preferably a resonance filter, which suppress signal factors (S2) that would put the system able to vibrate in natural resonance.

4. Fabrication facility or automation facility (10) according to any one of the preceding claims 1 to 2, **characterized in that** a data file or a sound file can be provided to the controller (11), which file provides the audible or tactile mechanical vibrations, wherein the controller (11) transcribes the data file or the sound file into signal factors (S2).

5. Fabrication facility or automation facility (10) according to any one of the preceding claims 1 to 2, **characterized in that** acoustic signals and/or tones can be generated by means of the controller (11) and the system able to vibrate.

6. Method for generating audible and/or tactile signals in predetermined situations in a fabrication facility or automation facility (10), which comprises an NC (numerically controlled) controller (11) and a numerically controlled linear motor (12), which can be electrically controlled by said controller (11) and serves as a direct drive and which forms a system able to vibrate together with its bearing (4, 4') and/or components of the fabrication facility or automation facility (10), the method comprising the steps:
- generating control factors (S1), which activate a productive controlled drive of the linear motor (12), by the use of the controller (11),
- generating signal factors (S2), which are to activate desired mechanical vibrations of the system able to vibrate, by the use of the controller (11), wherein the signal factors (S2) concern electric currents,
- feeding the linear motor (12) with the signal factors (S2) in addition to the control factors (S1) so as to put the system able to vibrate in mechanical vibration by the use of the linear motor (12), wherein the desired mechanical vibrations are audible and/or tactile in the surroundings of the fabrication facility or automation facility (10) and wherein the control factors (S1) concern electric currents.

7. Method according to claim 6, **characterized in that** a data file or a sound file can be provided in a supplementary step, wherein the controller (11) transcribes the data file or sound file into the signal factors (S2).

8. Method according to claim 7, **characterized in that** when generating the signal factors (S2), the controller (11) uses filters (28) which suppress signal factors (S2) that would put the system able to vibrate in natural resonance.

9. Method according to any one of the claims 6 to 8, **characterized in that** sensors for supplying feedback signals to the controller (11) are provided in the fabrication facility or automation facility (10), wherein the controller (11) generates predetermined mechanical vibrations for predefined states of the fabrication facility or automation facility (10).

10. Method according to any one of the claims 6 to 8, **characterized in that** data files and/or sound files can be provided to the fabrication facility or automation facility (10) in a preparatory step.

11. Method according to any one of the claims 6 to 8, **characterized in that**, using a user interface,
- acoustic signals and/or
- tones can be provided to the fabrication facility or automation facility (10) in a preparatory step.

12. Method according to claim 11, **characterized in that** the controller (11) is connected to a storage medium, in which acoustic signals and/or tones are predefined.

## Revendications

1. Installation de fabrication ou installation d'automatisation (10) ayant plusieurs axes CN (commandés de façon numérique), comprenant une commande numérique (11) et au moins un moteur linéaire (12) qui peut être commandé par ladite commande (11), qui est contrôlé de façon numérique, qui sert à entraînement direct et qui forme un système apte à vibrer avec son palier (4, 4') et/ou des parties de l'installation de fabrication ou l'installation d'automatisation (10), dans lequel la commande (11) est apte à imprimer au moteur linéaire (12) des données de commande (S1) qui déclenchent un mouvement productif contrôlé du moteur linéaire (12), dans lequel le moteur linéaire (12) porte sur un moteur linéaire (12) dirigeable et les données de commande (S1) portent sur des courants électriques,
**caractérisé en ce que**
- la commande (11) est apte à imprimer au moteur linéaire (12) des données de signal (S2) prédéterminées supplémentaire auxdites données de commande (S1) dans des situations prédéterminées, lesdites données de signal (S2) déclenchant des vibrations mécaniques voulues du système apte à vibrer, cependant les données de signal (S2) sont imposées afin que les vibrations mécaniques sont audibles et/ou tactiles et cependant les données de signal (S2) portent sur des courants électriques.

2. Installation de fabrication ou installation d'automatisation (10) selon la revendication 1, **caractérisé en ce que** les données de commande (S1) et les données de signal (S2) sont superposées avant qu'elles sont imprimées au moteur (12).

3. Installation de fabrication ou installation d'automatisation (10) selon quelques-unes des revendications précédentes, **caractérisé en ce que** la commande (11) comprend des filtres (28), préférablement un filtre de résonance, qui suppriment des données de signal (S2) qui mettraient le system apte à vibrer dans sa propre résonance.

4. Installation de fabrication ou installation d'automatisation (10) selon quelques-unes des revendications précédentes 1 à 2, **caractérisé en ce que** un fichier de données ou un fichier sonore peut être imposé à la commande (11), lequel fichier peut imposer les vibrations mécaniques audibles ou tactiles, cependant la commande (11) transpose le fichier de données ou le fichier sonore en des données de signal (S2).

5. Installation de fabrication ou installation d'automatisation (10) selon quelques-unes des revendications précédentes 1 à 2, **caractérisé en ce que** des signaux sonores et/ou des sons peuvent être générés moyennant la commande (11) et le system apte à vibrer.

6. Procédé pour générer des signaux audibles et/ou tactiles dans des situations prédéterminées dans un installation de fabrication ou installation d'automatisation (10) comprenant une commande numérique (11) et un moteur linéaire (12) qui peut être commandé par ladite commande (11), sert à entraînement direct, est dirigeable de façon électrique, est contrôlé de façon numérique et qui forme un système apte à vibrer avec son palier (4, 4') et/ou des parties de l'installation de fabrication ou l'installation d'automatisation (10), le procédé comprenant les étapes suivantes:
- générer des données de commande (S1), qui déclenchent un mouvement productif contrôlé du moteur linéaire (12), moyennant la commande (11),
- générer des données de signal (S2), qui sont à déclenchées des vibrations mécaniques du système apte à vibrer, moyennant la commande (11), cependant les données de signal (S2) portent sur des courants électriques,
- imprimer les données de signal (S2) dans le moteur linéaire (12) supplémentaire auxdites données de commande (S1) afin de mettre le système apte à vibrer dans une vibration mécanique, cependant les vibrations mécaniques voulues sont audibles et/ou tactiles dans l'environnement de l'installation de fabrication ou l'installation d'automatisation (10) et cependant les données de commande (S1) portent sur des courants électriques.

7. Procédé selon la revendication 6, **caractérisé en ce qu'**un fichier de données ou un fichier sonore peut être imposé dans une étape supplémentaire, cependant la commande (11) transpose le fichier de données ou le fichier sonore en les données de signal (S2).

8. Procédé selon la revendication 7, **caractérisé en ce qu'**en générant les données de signal (S2), la commande (11) utilise des filtres (28) qui suppriment des données de signal (S2) qui mettraient le system apte à vibrer dans sa propre résonance.

9. Procédé selon quelques-unes des revendications 6 à 8, **caractérisé en ce que** des capteurs sont prévus dans l'installation de fabrication ou installation d'automatisation (10) afin de fournir des retours d'information à la commande (11), cependant la commande (11) génère des vibrations mécaniques prédéterminées en cas des états prédéterminées de l'installation de fabrication ou l'installation d'automatisation (10).

10. Procédé selon quelques-unes des revendications 6 à 8, **caractérisé en ce** des fichiers de données et/ou des fichiers sonores peuvent être imposés à l'installation de fabrication ou installation d'automatisation (10) dans une étape préparatoire.

11. Procédé selon quelques-unes des revendications 6 à 8, **caractérisé en ce que**
- des signaux sonores et/ou
- des sons
peuvent être imposés à l'installation de fabrication ou installation d'automatisation (10) dans une étape préparatoire moyennant une interface utilisateur.

12. Procédé selon la revendication 11, **caractérisé en ce** la commande (11) est raccordée à un support de données, dans lequel des signaux sonores et/ou des sons sont prédéfinis.
